# EUROPÄISCHE PATENTANMELDUNG

(11) **EP 4 538 203 A1**
(43) Veröffentlichungstag der Anmeldung: **16.04.2025**
(21) Anmeldenummer: 24201168.2
(22) Anmeldetag: 18.09.2024
(51) Int. Cl.: B65G 15/44, B65B 35/24, B65B 59/00, B65G 15/58, B65G 17/46, B65G 19/24, B65G 47/08, B65G 47/84

(54) **VERFAHREN UND EINE VERPACKUNGSVORRICHTUNG ZUR HANDHABUNG VON EINWEGVERPACKUNGEN UND MEHRWEGVERPACKUNGEN**

(30) Priorität: 10.10.2023 DE 102023127666
(71) Anmelder: Krones Aktiengesellschaft, 93073 Neutraubling (DE)
(72) Erfinder: GUT, Tobias, 93073 Neutraubling (DE); KUEHNL, Maximilian, 93073 Neutraubling (DE); REICHENBECHER, Dietrich, 93073 Neutraubling (DE)
(74) Vertreter: Benninger Patentanwaltskanzlei

(57) **Zusammenfassung**

Mit der Erfindung sind ein Verfahren und eine Verpackungsvorrichtung (1) zur Handhabung von Einwegverpackungen (20) und Mehrwegverpackungen offenbart.

Die Verpackungsvorrichtung (1) umfasst zur Handhabung der Einwegverpackungen (20) und Mehrwegverpackungen mindestens ein abschnittsweise linear bewegliches Transportmittel (2), das für die teilungsbehaftete Verarbeitung von Einwegverpackungen (20) eine Mehrzahl von lösbaren oder beweglich ausgebildeten Mitnehmerelementen (3) umfasst.

Bei einem Wechsel von einem Einweg-Produktionsmodus (PM1) in einen Mehrweg-Produktionsmodus wird zumindest ein Teil der Mitnehmerelemente (3) von dem Transportmittel (2) gelöst. Bei einem Wechsel von dem Mehrweg-Produktionsmodus in den Einweg-Produktionsmodus (PM1) werden die Mitnehmerelemente (3) wieder an dem Transportmittel (2) befestigt.

Alternativ kann bei einem Wechsel vom Einweg-Produktionsmodus (PM1) in den Mehrweg-Produktionsmodus zumindest ein Teil der Mitnehmerelemente (3) aus einem Eingriffsbereich der Einwegverpackungen (20) oder Mehrwegverpackungen entfernt werden. Bei dem Wechsel von dem Mehrweg-Produktionsmodus in den Einweg-Produktionsmodus (PM1) werden die Mitnehmerelemente (3) wieder in den Eingriffsbereich der Einwegverpackungen (20) oder Mehrwegverpackungen gebracht.

## Beschreibung

Die vorliegende Erfindung betrifft ein Verfahren zur Handhabung von Einwegverpackungen und Mehrwegverpackungen innerhalb einer Verpackungsvorrichtung. Zudem betrifft die Erfindung eine Verpackungsvorrichtung zur Handhabung von Einwegverpackungen und Mehrwegverpackungen.

In der Getränkeindustrie sind sowohl Einwegverpackungen als auch Mehrwegverpackungen bekannt. Bei Einwegverpackungen handelt es sich beispielsweise um Verpackungseinheiten wie bspw. um dünnwandige PET-Flaschen oder Dosen aus einem Kunststoff oder Aluminium, während es sich bei Mehrwegverpackungen bspw. um Verpackungseinheiten handeln kann, in denen Glasflaschen oder Behälter aus einem dickwandigen und formstabilen Kunststoff zusammengefasst sind.

Die Einweg-Behälter werden in der Regel zu Behältergruppen zusammengestellt und mit einem Sekundärverpackungsmittel zu Einwegverpackungen bzw. Gebinden zusammengefasst. Beispielsweise werden mehrere Einweg-Behälter durch mindestens eine Umreifung, eine Schrumpffolie oder einen oberen Greifkartonzuschnitt zusammengefasst.

Unter den hier verwendeten und allgemein gebräuchlichen Begriff der Einwegverpackung fallen beispielsweise auch Kartons mit Weinflaschen, da die durch den Karton gebildete Umverpackung in der Regel nicht wiederverwendet wird und zudem anfällig für Beschädigungen ist.

Aufgrund dieser Anfälligkeit für Beschädigungen und der geringen Stabilität von Einwegverpackungen werden diese meist einzeln oder in kleinen Gruppen, umfassend nur eine geringe Anzahl von direkt aufeinanderfolgend und aneinandergrenzend bewegten Einwegverpackungen, transportiert. Für einen solchen Transport findet in der Regel eine Fördereinrichtung mit einer sogenannten Taktkette Verwendung, über welche die Einwegverpackungen oder die Kleingruppen mit einer regelmäßigen Beabstandung in definierter Transportrichtung bewegt werden. Einen solchen Transport bezeichnet man auch als teilungsbehafteten Transport.

Dagegen werden Mehrweg-Behälter häufig in stabilen Kästen angeordnet, welche Kästen oder Kartons durch sogenannte Gefache unterteilt sind. Die dadurch gebildeten Verpackungseinheiten werden als Mehrwegverpackungen bezeichnet.

Mehrwegverpackungen weisen in der Regel eine hohe Stabilität auf und werden für einen hohen Durchsatz häufig direkt aufeinanderfolgend und dabei direkt aneinandergrenzend, d.h. Stoß an Stoß bewegt. Dies bezeichnet man auch als teilungsfreien Transport.

Die Einwegverpackungen oder Mehrwegverpackungen werden häufig zu Lagen zusammengestellt und als Großgebinde für den Transport bzw. die Lagerhaltung palettiert. In diesem Zusammenhang werden die fertigen Einwegverpackungen oder Mehrwegverpackungen zu nachfolgenden Handhabungsmodulen transportiert.

Für den teilungsfreien und den teilungsbehafteten Transport müssen die Transportmittel für die Einwegverpackungen oder Mehrwegverpackungen jeweils entsprechend ausgebildet sein. Zwar kann eine Verpackungsanlage, die für Einwegverpackungen ausgelegt ist, gegebenenfalls für die Verarbeitung von Mehrwegverpackungen verwendet werden, sofern die Transportmittel für den getakteten Transport geeignete Abstände zur Aufnahme der Mehrwegverpackungen aufweisen. Jedoch ist in diesem Fall der Durchsatz der Mehrwegverpackungen und somit die Leistung der Verpackungsanlage entsprechend begrenzt.

Eine Aufgabe der vorliegenden Erfindung besteht darin, die Verarbeitung sowohl von Einwegverpackungen, als auch von Mehrwegverpackungen innerhalb einer Verpackungsanlage zu ermöglichen.

Die obige Aufgabe wird durch ein Verfahren zur Handhabung von Einwegverpackungen und Mehrwegverpackungen und durch eine Verpackungsvorrichtung gelöst, die die Merkmale in den unabhängigen Ansprüchen umfassen. Weitere vorteilhafte Ausgestaltungen werden durch die Unteransprüche beschrieben.

Die Erfindung bezieht sich auf ein Verfahren zur Handhabung von Einwegverpackungen und Mehrwegverpackungen innerhalb einer Verpackungsvorrichtung und auf eine entsprechende Verpackungsvorrichtung.

Eine Verpackungsvorrichtung, die zur Ausführung des Verfahrens geeignet ist, umfasst mindestens ein abschnittsweise linear bewegliches Transportmittel, welches Transportmittel für die teilungsbehaftete Verarbeitung von Einwegverpackungen eine Mehrzahl von lösbaren oder beweglich ausgebildeten Mitnehmerelementen umfasst. Ein solches mit Mitnehmerelementen ausgestattetes Transportmittel wird auch als Taktkette bezeichnet.

Bei dem Transportmittel handelt es sich vorzugsweise um ein Endlosfördermittel, beispielsweise wird das Transportmittel durch ein oder mehrere umlaufende Förderketten oder Förderbänder gebildet.

Unter teilungsbehafteter Verarbeitung ist zu verstehen, dass die Einwegverpackungen einzeln und voneinander beabstandet in einer Transportrichtung bewegt werden oder aber das die Einwegverpackungen in Kleingruppen umfassend zwei oder mehr, insbesondere bis maximal fünf Einwegverpackungen transportiert werden. Innerhalb der Kleingruppe können die Einwegverpackungen Stoß- an Stoß vorliegen. Zwischen den Kleingruppen ist jedoch ein Abstand vorgesehen. Der Abstand zwischen den Kleingruppen soll verhindern, dass zu hohe Kräfte auf die einzelnen Einwegverpackungen einwirken, die zu einer Beschädigung derselben führen könnten.

Gemäß einer ersten Ausführungsform der Erfindung ist vorgesehen, dass bei einem Wechsel von einem Einweg-Produktionsmodus in einen Mehrweg-Produktionsmodus zumindest ein Teil der Mitnehmerelemente gelöst wird oder, dass bei einem Wechsel von einem Einweg-Produktionsmodus in einen Mehrweg-Produktionsmodus alle Mitnehmerelement von dem Transportmittel gelöst werden.

Der Hintergrund einer solchen Maßnahme ist insbesondere, dass Einwegverpackungen bspw. durch Kartons gebildet sein können, die relativ nachgiebige oder weiche Wandungen aufweisen, während Mehrwegverpackungen insbesondere durch Kästen gebildet sein können, d.h. bspw. durch Getränkekästen, die oben offen sind zur Aufnahme einer definierten Anzahl von Behältnissen wie Flaschen. Da solche Kästen oder Getränkeästen generell stabiler sind als nachgiebige Kartons und andererseits bei der Verwendung von Kästen mehr Flaschen je einzelnem Takt befördert werden können, ist es möglich, bei den Mehrwegverpackungen, d.h. bei den Kästen, mit insgesamt weniger Kontaktelementen zu arbeiten als bei Einwegverpackungen.

Bei der Verwendung von Kästen oder anderen Mehrwegverpackungen ist es sogar denkbar, die Kästen lückenlos zu befördern und die Kästen aneinander stoßen zu lassen, was bei weichen Mehrwegverpackungen in der Regel nicht sinnvoll ist.

Werden alle Mitnehmerelemente vom Transportmittel gelöst, dann wird dadurch ein teilungsfreies Transportmittel ausgebildet, dass für den lückenfreien Transport von Mehrwegverpackungen, insbesondere von Kästen o.ä. geeignet ist.

Wird nur ein Teil der Mitnehmerelemente von dem Transportmittel gelöst, dann wird dadurch ein teilweise teilungsbehaftetes Transportmittel erzeugt, welches nachfolgend auch als zweite Taktkette bezeichnet wird. Bei der zweiten Taktkette sind die Taktbereiche größer ausgebildet als bei der sogenannten ersten Taktkette, welche vollständig mit Mitnehmerelementen ausgestattet ist.

Die zweite Taktkette ist zur Handhabung von Einwegverpackungen geeignet, welche in Transportrichtung eine erhöhte Länge aufweisen. Die zweite Taktkette kann auch zur Handhabung von Kleingruppen von Einweggebinden verwendet werden, sofern diese die hierfür notwendige Stabilität aufweisen. Auch bei der Handhabung von Mehrwegverpackungen kann es gewünscht werden, dass diese gruppenweise der weiteren Handhabung zugeführt werden, so dass die zweite Taktkette auch hierfür vorteilhaft verwendet werden kann.

Weiterhin ist bei dieser Ausführungsform vorgesehen, dass bei einem Wechsel von dem Mehrweg-Produktionsmodus in den Einweg-Produktionsmodus die Mitnehmerelemente wieder an dem Transportmittel befestigt werden.

Eine bevorzugte Ausführungsform gemäß der oben beschriebenen ersten Ausführungsform der Erfindung kann vorsehen, dass die Mitnehmerelemente über einen Schnellwechselmechanismus lösbar mit dem Transportmittel verbunden sind. Bei dem Wechsel von dem Einweg-Produktionsmodus in den Mehrweg-Produktionsmodus werden die Schnellwechselmechanismen von zumindest einem Teil der Mitnehmerelemente gelöst. Dementsprechend ist vorgesehen, dass bei dem Wechsel von dem Mehrweg-Produktionsmodus in den Einweg-Produktionsmodus wiederum Mitnehmerelemente über den Schnellwechselmechanismus an dem Transportmittel befestigt werden.

Bevorzugt ist vorgesehen, dass die Mitnehmerelemente bei dem Wechsel von dem Einweg-Produktionsmodus in den Mehrweg-Produktionsmodus automatisiert von dem Transportmittel gelöst werden können und insbesondere automatisiert in einem dem Transportmittel zugeordneten Magazin eingelagert werden können.

Weiterhin ist bevorzugt vorgesehen, dass die Mitnehmerelemente automatisiert aus einem dem Transportmittel zugeordneten Magazin entnommen und am Transportmittel befestigt werden können.

Beispielsweise umfasst die Verpackungsvorrichtung eine Wechseleinrichtung, welche Wechseleinrichtung dazu ausgebildet ist, die Mitnehmerelemente von dem Transportmittel zu lösen und in dem dem Transportmittel zugeordneten Magazin einzulagern und welche Wechseleinrichtung dazu ausgebildet ist, die Mitnehmerelemente automatisiert aus dem Magazin zu entnehmen und am Transportmittel zu befestigen.

Bei der Wechseleinrichtung kann es sich um einen entsprechend programmierten Roboter o.ä. handeln.

Alternativ kann der Umbau des Transportmittels durch Lösen oder Befestigen von Mitnehmerelementen auch manuell von einem Bediener der Verpackungsanlage durchgeführt werden.

Eine alternative zweite Ausführungsform der Erfindung sieht vor, dass bei einem Wechsel von einem Einweg-Produktionsmodus in einen Mehrweg-Produktionsmodus alle oder zumindest ein Teil der Mitnehmerelemente aus einem Eingriffsbereich der Einwegverpackungen oder Mehrwegverpackungen entfernt werden. Weiterhin ist vorgesehen, dass bei dem Wechsel von dem Mehrweg-Produktionsmodus in den Einweg-Produktionsmodus die Mitnehmerelemente wieder in den Eingriffsbereich der Einwegverpackungen oder Mehrwegverpackungen gebracht werden.

Eine bevorzugte Ausführungsform gemäß der oben beschriebenen zweiten Ausführungsform der Erfindung kann vorsehen, dass die Mitnehmerelemente schwenkbeweglich oder klappbar an dem Transportmittel angeordnet sind, insbesondere wobei die jeweilige Position der Mitnehmerelemente in einem Produktionsmodus am Transportmittel fixiert ist und wobei in einem Wechselmodus die Fixierung gelöst wird.

Eine bevorzugte Ausführungsform sieht vor, dass bei dem Wechsel von dem Einweg-Produktionsmodus in den Mehrweg-Produktionsmodus alle oder zumindest ein Teil der Mitnehmerelemente seitlich weggeschwenkt oder weggeklappt werden können und sich somit nicht mehr innerhalb eines Eingriffsbereich der Einwegverpackungen oder Mehrwegverpackungen befinden.

Eine alternative Ausführungsvariante des Verfahrens kann jedoch auch vorsehen, dass bei dem Wechsel von dem Einweg-Produktionsmodus in den Mehrweg-Produktionsmodus zumindest ein Teil der Mitnehmerelemente in Laufrichtung oder gegen die Laufrichtung des Transportmittels verschwenkt oder weggeklappt wird und damit aus dem Eingriffsbereich der Einwegverpackungen oder Mehrwegverpackungen gebracht werden kann.

Bevorzugt erfolgt die Fixierung der Mitnehmerelemente am Transportmittel und das Lösen der Fixierung der Mitnehmerelemente am Transportmittel automatisiert oder zumindest teilautomatisiert.

Insbesondere kann vorgesehen sein, dass den Mitnehmerelementen jeweils eine Fixiereinrichtung zugeordnet ist, wobei in einem Produktionsmodus eine jeweilige Position der Mitnehmerelemente am Transportmittel durch die Fixiereinrichtung fixiert ist und wobei in einem Wechselmodus die Fixierung der Mitnehmerelemente durch die jeweils zugeordnete Fixiereinrichtung lösbar ist.

Zusammengefasst besteht die Erfindung darin, dass durch die Umstrukturierung des Transportmittels Verpackungseinheiten entweder teilungsbehaftet oder teilungsfrei bearbeitet werden können. Hierbei ist unter teilungsbehaftet die Handhabung von Verpackungseinheiten zu verstehen, wobei zwischen den einzelnen Verpackungseinheiten, insbesondere Einwegverpackungen, oder zwischen Gruppen von in der Regel zwei bis drei Verpackungseinheiten, insbesondere Gruppen von in der Regel zwei bis drei Einwegverpackungen, jeweils definierte Abstände ausgebildet sind. Zudem zeichnet sich die teilungsbehaftete Handhabung dadurch aus, dass die Produkte immer auf dem Transportmittel geführt bewegt werden, insbesondere werden die Produkte hierbei durch die Mitnehmerelemente geführt.

Dagegen ist unter teilungsfrei die Handhabung von Verpackungseinheiten zu verstehen, dass diese unmittelbar aufeinanderfolgend bewegt und/oder gehandhabt werden, insbesondere ohne Abstand zwischen den aufeinanderfolgend bewegten Verpackungseinheiten.

Der Vorteil liegt darin, dass nunmehr eine Verpackungsvorrichtung zur Handhabung unterschiedlicher Verpackungseinheiten verwendet werden kann, insbesondere zur alternativen Handhabung von Einwegverpackungen und Mehrwegverpackungen. Hierbei können vollkommen unterschiedliche Leistungsniveaus erzielt werden. Bei der teilungsfreien Verarbeitung von stabilen Mehrwegverpackungen lassen sich innerhalb der Verpackungsvorrichtung deutlich höhere Leistungen erzielen als bei der Verarbeitung von instabileren Einwegverpackungen.

Die vorbeschriebene Verpackungsvorrichtung kann vorzugsweise Teil einer Getränkeverpackungsanlage sein. Eine solche Getränkeverpackungsanlage umfasst beispielsweise einen Nassteil mit einem Dosen und/oder Flaschenabschieber, einem Füllmodul und einem dem Füllmodul zugeordneten Verschließmodul sowie optional ein Etikettiermodul. Zwischen dem Füllmodul und dem Etikettiermodul oder anderen nachfolgenden Handhabungsmodulen kann ein Pasteur (oder Pasteurisier-Modul) angeordnet sein.

Auch ist vorstellbar, dass die Getränkeverpackungsanlage beispielsweise ein Blasformmodul zur Herstellung von PET-Flaschen umfasst, welche nachfolgend befüllt, verschlossen und etikettiert werden.

Nachfolgend werden die in Dosen oder Flaschen abgefüllten Getränke in einer Verpackungsvorrichtung bzw. einem sogenannten Herstellungsmodul zu Verpackungseinheiten zusammengefasst bzw. es werden Stückgüter in Form von Gebinden erzeugt.

Beispielsweise werden mehrere Artikel zu Artikelgruppen zusammengestellt, welche mit einem Verpackungsmittel zusammengefasst werden.

Bei den Artikeln handelt es sich vorzugsweise um Getränkebehälter, insbesondere um Flaschen aus PET oder einem anderen geeigneten Kunststoff oder auch Glas. Bevorzugt können die Artikel auch durch Dosen aus Kunststoff, Glas und/oder Aluminium oder einem anderen Metall o.ä. gebildet sein.

Die Verpackungseinheiten werden nachfolgend in einem als Gruppiermodul bzw. Lagenbildungsmodul ausgebildeten Handhabungsmodul o.ä. zu palettierfähigen Lagen zusammengestellt, welche in einer Palettiervorrichtung auf Paletten gestapelt werden.

Innerhalb der Getränkeverpackungsanlage werden die Artikel und Verpackungseinheiten bzw. Stückgüter über geeignete Transportsysteme, welche gegebenenfalls mit geeigneten Puffersystemen ausgestattet sind, von einem Handhabungsmodul zum nächsten befördert.

Die Komponenten der Getränkeverpackungsanlage sind nur beispielhaft zu verstehen. Andere Konfigurationen umfassend eine im Rahmen der Anmeldung beschriebene Transportstrecke mit nachgeordnetem Handhabungsmodul sollen ebenfalls von der Anmeldung umfasst sein.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt ein Transportmittel einer Verpackungsvorrichtung in einem ersten Produktionsmodus.
Fig. 2 zeigt das Transportmittel der Verpackungsvorrichtung in einem zweiten Produktionsmodus.
Fig. 3 zeigt das Transportmittel der Verpackungsvorrichtung in einem dritten Produktionsmodus.
Fig. 4 zeigt das Transportmittel der Verpackungsvorrichtung in einem vierten Produktionsmodus.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

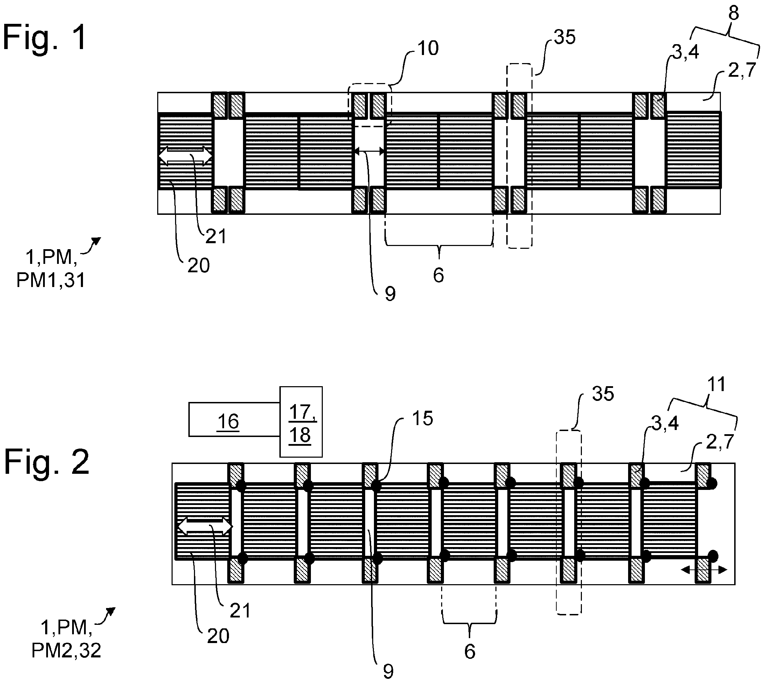

Die schematische Darstellung Fig. 1 zeigt ein mindestens abschnittsweise linear bewegliches Transportmittel 2 einer Verpackungsvorrichtung 1 in einem ersten Produktionsmodus PM1, insbesondere in einem ersten Einweg-Produktionsmodus 31.

Das Transportmittel 2 wird beispielsweise durch ein oder mehrere umlaufende Förderketten oder Förderbänder gebildet.

Das Transportmittel 2 ist für die teilungsbehaftete Verarbeitung bzw. Handhabung von Einwegverpackungen 20 mit einer Mehrzahl von lösbaren oder beweglich ausgebildeten Mitnehmerelementen 3 ausgestattet, welche auch als Schubfinger 4 bezeichnet werden. Ein solches mit Mitnehmerelementen 3 ausgestattetes Transportmittel 2 wird auch als Taktkette 8 bezeichnet.

Im vorliegenden Fall werden immer Gruppen bestehend aus zwei Einwegverpackungen 20 gemeinsam innerhalb einer Teilung 5 in Transportrichtung 6 bewegt.

Die Größe der Teilung 5 entspricht bei der Ausführungsform der Fig. 1 jeweils zweimal der Länge 21 einer Einwegverpackung 20 in Transportrichtung 6.

Die Mitnehmerelemente 3 sind den Randbereichen des Transportmittels 2 zugeordnet. Insbesondere sind jeweils zwei Mitnehmerelemente 3 einander gegenüberliegend an den gegenüberliegenden Randbereichen des Transportmittels angeordnet und bilden ein Mitnehmerpaar 35.

Alternativ kann vorgesehen sein, dass Mitnehmerelemente 3 von unten her aus einer durch das Transportmittel 2 gebildeten Transportebene 7 nach oben reichend ausgebildet sind und auf diese Weise an den Einwegverpackungen 20 angreifen. In diesem Fall wäre auch eine mittige Anordnung der Mitnehmerelemente 3 in Bezug auf das Transportmittel 2 und die Transportrichtung 6 möglich.

In Fig. 1 ist dargestellt, dass zudem jeweils zwei Mitnehmerelemente 3 je Seite paarweise angeordnet sind und dass jeweils zwischen zwei Paaren 10 an Mitnehmerelementen 3 je Seite die Teilung 5 für die Einwegverpackungen 20 ausgebildet wird. Zudem ist jedem Paar 10 von Mitnehmerelementen 3 in einem Randbereich des Transportmittels 2 gegenüberliegend ein weiteres jedem Paar 10 von Mitnehmerelementen 3 zugeordnet.

Unter teilungsbehafteter Verarbeitung ist zu verstehen, dass die Einwegverpackungen 20 einzeln und voneinander beabstandet in der Transportrichtung 6 bewegt werden oder aber das die Einwegverpackungen 20 in Kleingruppen umfassend zwei bis maximal fünf Einwegverpackungen 20 transportiert werden, wobei die Einwegverpackungen 20 innerhalb der Kleingruppe Stoß- an Stoß vorliegen. Zwischen den einzelnen Einwegverpackungen 20 oder den Kleingruppen ist ein durch die Mitnehmerelemente 3 bzw. durch die paarweise an einem Randbereich des Transportmittels 2 angeordneten Mitnehmerelemente 3 vorgegebener Abstand 9 vorgesehen. Der Abstand 9 soll verhindern, dass zu hohe Kräfte auf die einzelnen Einwegverpackungen 20 einwirken, die zu einer Beschädigung derselben führen könnten.

Eine weitere, in Fig. 2 dargestellte Ausführungsform kann vorsehen, dass die Teilungsabstände eine Größe aufweisen, so dass jeweils nur eine Einwegverpackung 20 innerhalb jeder Teilung 5 angeordnet und in Transportrichtung 6 bewegt werden kann. Insbesondere zeigt Fig. 2 das Transportmittel 2 der Verpackungsvorrichtung 1 in einem zweiten Produktionsmodus PM2, insbesondere in einem zweiten Einweg-Produktionsmodus 32.

Hierbei sind die Mitnehmerelemente 3 nicht paarweise je Seite des Transportmittels 2 angeordnet, sondern jeweils einzeln. Auch hierbei ist jedem Mitnehmerelement 3 an einer Seite des Transportmittels 2 ein auf der anderen Seite des Transportmittels 2 gegenüberliegendes Mitnehmerelement 3 zugeordnet und bildet mit diesem ein Mitnehmerpaar 35.

Die Größe der Teilung 5 bei diesem auch als zweite Taktkette 11 bezeichneten Transportmittel 2 entspricht bei der Ausführungsform der Fig. 2 jeweils einer Länge 21 einer Einwegverpackung 20 in Transportrichtung 6.

Der zwischen den einzelnen Einwegverpackungen 20 ausgebildete Abstand 9 wird in diesem Fall durch die Größe eines einzelnen Mitnehmerelements 3 definiert.

Um die Verpackungsvorrichtung 1 von dem ersten Produktionsmodus PM1 in den zweiten Produktionsmodus PM2 zu überführen, muss die Anordnung der Mitnehmerelemente 3 am Transportmittel 2 entsprechend angepasst werden.

Die Mitnehmerelemente 3 können hierbei entweder vom Transportmittel 2 gelöst und an neuen Positionen wieder am Transportmittel 2 angeordnet werden. Alternativ kann vorgesehen sein, dass die Mitnehmerelemente 3 schiebebeweglich am Transportmittel 2 angeordnet sind, um diese entsprechend positionieren zu können. Die Schiebebeweglichkeit wird durch den Doppelpfeil am unteren rechten Mitnehmerelement 3 schematisch verdeutlicht.

Vorzugsweise kann ein sogenannter Wechselmodus vorgesehen sein, in welchem die Mitnehmerelemente 3 am Transportmittel 2 in Transportrichtung 6 oder entgegen der Transportrichtung 6 verschoben werden können. Dagegen muss die Position der Mitnehmerelemente 3 im Produktionsmodus PM fixiert sein.

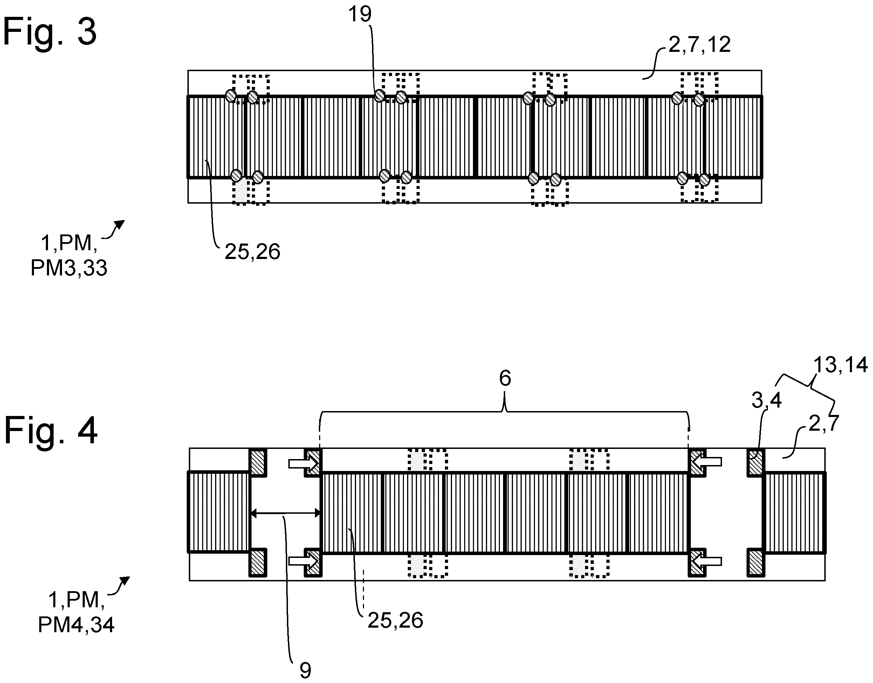

Gemäß einer Ausführungsform kann vorgesehen sein, dass das Lösen der Fixierung der Mitnehmerelemente 3 im Wechselmodus und das Positionieren gemäß einem nachfolgenden neuen Produktionsmodus PM automatisiert erfolgt. Hierbei steuert eine Steuerungseinrichtung (nicht dargestellt) der Verpackungsvorrichtung 1 entsprechende, den Mitnehmerelementen 3 zugeordnete Fixiereinrichtungen (vergleiche Fig. 3) und/oder Positionierungseinrichtungen (nicht dargestellt) an.

Die schematische Darstellung der Fig. 3 zeigt ein Transportmittel 2 einer Verpackungsvorrichtung 1 in einem dritten Produktionsmodus PM3, insbesondere in einem ersten Mehrweg-Produktionsmodus 33, und die Fig. 4 zeigt ein Transportmittel 2 einer Verpackungsvorrichtung 1 in einem vierten Produktionsmodus PM4, insbesondere in einem zweiten Mehrweg-Produktionsmodus 34.

Die Figuren 3 und 4 zeigen im Vergleich zu den Figuren 1 und 2, dass bei einem Wechsel von einem Einweg-Produktionsmodus PM1, PM2 in einen Mehrweg-Produktionsmodus PM3, PM4 alle Mitnehmerelemente 3 von dem Transportmittel 2 gelöst werden (Fig. 3) oder dass bei einem Wechsel von einem Einweg-Produktionsmodus PM1, PM2 in einen Mehrweg-Produktionsmodus PM3, PM4 zumindest ein Teil der Mitnehmerelemente 3 von dem Transportmittel 2 gelöst wird (Fig. 4).

Werden, wie in Fig. 3 dargestellt, alle Mitnehmerelemente 3 vom Transportmittel 2 gelöst, dann wird dadurch ein sogenanntes teilungsfreies Transportelement 12 ausgebildet, dass für den lückenfreien Transport von Mehrwegverpackungen 25 geeignet ist, insbesondere für den lückenfreien Transport von Mehrweg-Kästen 26 o.ä.

Wird dagegen, wie in Fig. 4 dargestellt, nur ein Teil der Mitnehmerelemente 3 von dem Transportmittel 2 gelöst, dann wird dadurch ein teilweise teilungsbehaftetes Transportelement 13 erzeugt, welches nachfolgend auch als dritte Taktkette 14 bezeichnet wird. Bei der dritten Taktkette 14 sind die Taktbereiche deutlich größer ausgebildet als bei der sogenannten ersten Taktkette 8 (Fig. 1) oder der zweiten Taktkette 11 (Fig. 2) für Einwegverpackungen 20, welche jeweils vollständig mit Mitnehmerelementen 3 ausgestattet sind.

Die dritte Taktkette 14 kann zur Handhabung von Mehrwegverpackungen 25 verwendet werden, wenn es beispielsweise für die nachfolgende Verarbeitung bzw. Handhabung der Mehrwegverpackungen 25 durch nachfolgende Handhabungsmodule vorteilhaft ist, wenn die Mehrwegverpackungen 25 in Gruppen umfassend jeweils eine definierte Anzahl von Mehrwegverpackungen 25 zugeführt werden.

Die dritte Taktkette 14 kann aber auch vorteilhaft zur Handhabung von größeren Einwegverpackungen 20 verwendet werden, insbesondere von Einwegverpackungen 20, welche in Transportrichtung 6 eine erhöhte Länge 21 aufweisen. Die dritte Taktkette 14 kann auch zur Handhabung von sogenannten Kleingruppen von Einwegverpackungen 20 verwendet werden, sofern diese die notwendige Stabilität aufweisen.

Um aus einem Mehrweg-Produktionsmodus PM3, PM4 wieder in einen Einweg-Produktionsmodus PM1, PM2 zu gelangen, müssen die vom Transportmittel 2 gelösten Mitnehmerelemente 3 wieder an dem Transportmittel 2 positioniert und befestigt werden.

Die Mitnehmerelemente 3 können hierbei beispielsweise über einen in Fig. 2 schematisch dargestellten Schnellwechselmechanismus 15 lösbar mit dem Transportmittel 2 verbunden sein. Bei dem Wechsel von einem Produktionsmodus PM in einen anderen Produktionsmodus PM werden die Schnellwechselmechanismen 15 von zumindest einem Teil der Mitnehmerelemente 3 gelöst. Dementsprechend ist vorgesehen, dass beispielsweise bei dem Wechsel von einem Mehrweg-Produktionsmodus PM3, PM4 in einen Einweg-Produktionsmodus PM1, PM2 wiederum Mitnehmerelemente 3 über den Schnellwechselmechanismus 15 an dem Transportmittel 2 befestigt werden.

Bevorzugt ist vorgesehen, dass die Mitnehmerelemente 3 bei dem Wechsel von einem Produktionsmodus PM in einen anderen Produktionsmodus PM automatisiert von dem Transportmittel 2 gelöst werden können und insbesondere automatisiert in einem dem Transportmittel 2 zugeordneten Magazin 16 eingelagert werden können.

Weiterhin ist bevorzugt vorgesehen, dass die Mitnehmerelemente 3 automatisiert aus einem dem Transportmittel 2 zugeordneten Magazin 16 entnommen und am Transportmittel 2 befestigt werden können.

Beispielsweise umfasst die Verpackungsvorrichtung 1 eine Wechseleinrichtung 17, welche Wechseleinrichtung 17 dazu ausgebildet ist, die Mitnehmerelemente 3 von dem Transportmittel 2 zu lösen und in dem Magazin 16 einzulagern. Weiterhin ist die Wechseleinrichtung 17 bevorzugt dazu ausgebildet, die Mitnehmerelemente 3 automatisiert aus dem Magazin 16 zu entnehmen und am Transportmittel 2 zu befestigen.

Bei der Wechseleinrichtung 17 kann es sich um einen entsprechend programmierten Roboter 18 o.ä. handeln.

Alternativ kann der Umbau des Transportmittels 2 durch Lösen oder Befestigen von Mitnehmerelementen 3 auch manuell von einem Bediener der Verpackungsvorrichtung 1 durchgeführt werden.

Eine alternative zweite Ausführungsform der Erfindung sieht vor, dass bei einem Wechsel von einem Einweg-Produktionsmodus PM1, PM2 in einen Mehrweg-Produktionsmodus PM3, PM4 alle oder zumindest ein Teil der Mitnehmerelemente 3 durch Wegklappen oder Verschwenken aus einem Eingriffsbereich der Einwegverpackungen 20 oder der Mehrwegverpackungen 25 entfernt werden. Weiterhin ist vorgesehen, dass bei dem Wechsel von einem Mehrweg-Produktionsmodus PM3, PM4 in einen Einweg-Produktionsmodus PM1, PM2 die Mitnehmerelemente 3 durch Klappen oder Verschwenken wieder in den Eingriffsbereich der Einwegverpackungen 20 oder Mehrwegverpackungen 25 gebracht werden.

Insbesondere sind die Mitnehmerelemente 3 hierfür klappbar oder schwenkbeweglich an dem Transportmittel 2 angeordnet. Dabei ist bevorzugt vorgesehen, dass die jeweilige Position der Mitnehmerelemente 3 in einem Produktionsmodus PM am Transportmittel 2 fixiert ist. In einem Wechselmodus kann diese Fixierung dagegen gelöst werden.

Bevorzugt erfolgt hierbei die Fixierung der Mitnehmerelemente 3 am Transportmittel 2 und das Lösen der Fixierung der Mitnehmerelemente 3 am Transportmittel 2 automatisiert.

Insbesondere kann vorgesehen sein, dass den Mitnehmerelementen 3 jeweils eine Fixiereinrichtung 19 (beispielhaft in Fig. 3 dargestellt) zugeordnet ist, wobei in einem Produktionsmodus PM eine jeweilige Position der Mitnehmerelemente 3 am Transportmittel 2 durch die Fixiereinrichtung 19 fixiert ist und wobei in einem Wechselmodus die Fixierung der Mitnehmerelemente 3 durch die jeweils zugeordnete Fixiereinrichtung 19 gelöst werden kann.

Ein abschließender Hinweis sei an dieser Stelle zu den Beschreibungen von Ausführungsvarianten der Erfindung gegeben, wobei diese Beschreibungspassagen jeweils auf die beigefügten Zeichnungen Bezug nehmen. Wenn im Zusammenhang der Figuren und deren Beschreibungen generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Verpackungsvorrichtung
- 2: Transportmittel
- 3: Mitnehmerelemente
- 4: Schubfinger
- 5: Teilung
- 6: Transportrichtung
- 7: Transportebene
- 8: (erste) Taktkette
- 9: Abstand
- 10: Paar
- 11: zweite Taktkette
- 12: teilungsfreies Transportelement
- 13: teilweise teilungsbehaftetes Transportelement
- 14: dritte Taktkette
- 15: Schnellwechselmechanismus
- 16: Magazin
- 17: Wechseleinrichtung
- 18: Roboter
- 19: Fixiereinrichtung
- 20: Einwegverpackung
- 21: Länge
- 25: Mehrwegverpackung
- 26: Mehrweg-Kasten
- 31: erster Einweg-Produktionsmodus
- 32: zweiter Einweg - Produktionsmodus
- 33: erster Mehrweg-Produktionsmodus
- 34: zweiter Mehrweg-Produktionsmodus
- 35: Mitnehmerpaar
- PM 1: erster Produktionsmodus
- PM2: zweiter Produktionsmodus
- PM3: dritter Produktionsmodus
- PM4: vierter Produktionsmodus

## Patentansprüche

1. Verfahren zur Handhabung von Einwegverpackungen (20) und Mehrwegverpackungen (25) innerhalb einer Verpackungsvorrichtung (1), wobei die Verpackungsvorrichtung (1) zur Handhabung der Einwegverpackungen (20) und Mehrwegverpackungen (25) mindestens ein abschnittsweise linear bewegliches Transportmittel (2) umfasst, welches Transportmittel (2) für die teilungsbehaftete Verarbeitung von Einwegverpackungen (20) eine Mehrzahl von lösbaren oder beweglich ausgebildeten Mitnehmerelementen (3) umfasst,
- wobei bei einem Wechsel von einem Einweg-Produktionsmodus (PM1, PM2) in einen Mehrweg-Produktionsmodus (PM3, PM4) zumindest ein Teil der Mitnehmerelemente (3) von dem Transportmittel (2) gelöst und wobei bei dem Wechsel von dem Mehrweg-Produktionsmodus (PM3, PM4) in den Einweg-Produktionsmodus (PM1, PM2) die Mitnehmerelemente (3) wieder an dem Transportmittel (2) befestigt werden, oder
- wobei bei einem Wechsel von einem Einweg-Produktionsmodus (PM1, PM2) in einen Mehrweg-Produktionsmodus (PM3, PM4) zumindest ein Teil der Mitnehmerelemente (3) aus einem Eingriffsbereich der Einwegverpackungen (20) oder Mehrwegverpackungen (25) entfernt wird, und wobei bei dem Wechsel von dem Mehrweg-Produktionsmodus (PM3, PM4) in den Einweg-Produktionsmodus (PM1, PM2) die Mitnehmerelemente (3) wieder in den Eingriffsbereich der Einwegverpackungen (20) oder Mehrwegverpackungen (25) gebracht werden.

2. Verfahren nach Anspruch 1, bei dem die Mitnehmerelemente (3) über einen Schnellwechselmechanismus (15) lösbar mit dem Transportmittel (2) verbunden sind, welcher Schnellwechselmechanismus (15) von zumindest einem Teil der Mitnehmerelemente (3) bei dem Wechsel von dem Einweg-Produktionsmodus (PM1, PM2) in den Mehrweg-Produktionsmodus (PM3, PM4) gelöst wird.

3. Verfahren nach Anspruch 2, bei dem bei einem Wechsel von dem Mehrweg-Produktionsmodus (PM3, PM4) in den Einweg-Produktionsmodus (PM1, PM2) Mitnehmerelemente (3) über den Schnellwechselmechanismus (15) an dem Transportmittel (2) befestigt werden.

4. Verfahren nach Anspruch 2 oder 3, bei dem die Mitnehmerelemente (3) automatisiert von dem Transportmittel (2) gelöst und insbesondere automatisiert in einem dem Transportmittel (2) zugeordneten Magazin (16) eingelagert werden.

5. Verfahren nach einem der Ansprüche 1 bis 4, bei dem die Mitnehmerelemente (3) automatisiert aus einem dem Transportmittel (2) zugeordneten Magazin (16) entnommen und am Transportmittel (2) befestigt werden.

6. Verfahren nach Anspruch 1, bei dem die Mitnehmerelemente (3) schwenkbeweglich an dem Transportmittel (2) angeordnet sind, insbesondere wobei die jeweilige Position der Mitnehmerelemente (3) in einem Produktionsmodus am Transportmittel (2) fixiert ist und wobei in einem Wechselmodus die Fixierung gelöst wird.

7. Verfahren nach Anspruch 6, bei welchem bei dem Wechsel von dem Einweg-Produktionsmodus (PM1, PM2) in den Mehrweg-Produktionsmodus (PM3, PM4) zumindest ein Teil der Mitnehmerelemente (3) seitlich verschwenkt oder weggeklappt wird.

8. Verfahren nach Anspruch 6, bei welchem bei dem Wechsel von dem Einweg-Produktionsmodus (PM1, PM2) in den Mehrweg-Produktionsmodus (PM3, PM4) zumindest ein Teil der Mitnehmerelemente (3) in Laufrichtung oder gegen die Laufrichtung des Transportmittels (2) verschwenkt oder weggeklappt wird.

9. Verfahren nach einem der Ansprüche 6 bis 8, bei dem die Fixierung der Mitnehmerelemente (3) am Transportmittel (2) und das Lösen der Fixierung der Mitnehmerelemente (3) am Transportmittel (2) automatisiert erfolgt.

10. Verpackungsvorrichtung (1), welche zur Handhabung von Einwegverpackungen (20) und Mehrwegverpackungen (25) ausgebildet ist,
- wobei die Verpackungsvorrichtung (1) zur Handhabung der Einwegverpackungen (20) und Mehrwegverpackungen (25) mindestens ein abschnittsweise linear bewegliches Transportmittel (2) umfasst,
welches Transportmittel (2) für die teilungsbehaftete Verarbeitung von Einwegverpackungen (20) oder Mehrwegverpackungen (25) in einem Einweg-Produktionsmodus (PM1, PM2) eine Mehrzahl von lösbaren oder beweglich ausgebildeten Mitnehmerelementen (3) umfasst,
- wobei das Transportmittel (2) in einem ersten Mehrweg-Produktionsmodus (PM3) ohne Mitnehmerelemente (3) ausgestattet ist oder wobei die Mitnehmerelemente (3) in dem ersten Mehrweg-Produktionsmodus (PM3) derart an dem Transportmittel (2) angeordnet sind, dass sich diese außerhalb eines Eingriffsbereich der Einwegverpackungen (20) oder Mehrwegverpackungen (25) befinden oder
- wobei das Transportmittel (2) in einem zweiten Mehrweg-Produktionsmodus (PM4) mit einer geringeren Anzahl an Mitnehmerelementen (3) als in einem Einweg-Produktionsmodus (PM1, PM2) ausgestattet ist oder wobei ein Teil der Mitnehmerelemente (3) in dem zweiten Mehrweg-Produktionsmodus PM4) derart an dem Transportmittel (2) angeordnet sind, dass sich diese außerhalb eines Eingriffsbereich der Einwegverpackungen (20) oder Mehrwegverpackungen (25) befinden.

11. Verpackungsvorrichtung (1) nach Anspruch 10, die eine Wechseleinrichtung (17) umfasst,
- welche Wechseleinrichtung (17) dazu ausgebildet ist, die Mitnehmerelemente (3) von dem Transportmittel (2) zu lösen und in einem dem Transportmittel (2) zugeordneten Magazin (16) einzulagern, und
- welche Wechseleinrichtung (17) dazu ausgebildet ist, die Mitnehmerelemente (3) automatisiert aus dem Magazin (16) zu entnehmen und am Transportmittel (2) zu befestigen.

12. Verpackungsvorrichtung (1) nach Anspruch 10 oder 11, bei der die Mitnehmerelemente (3) über einen Schnellwechselmechanismus (15) lösbar mit dem Transportmittel (2) verbunden sind.

13. Verpackungsvorrichtung (1) nach Anspruch 10, bei der die Mitnehmerelemente (3) schwenkbeweglich an dem Transportmittel (2) angeordnet sind.

14. Verpackungsvorrichtung (1) nach Anspruch 13, bei der den Mitnehmerelementen (3) jeweils eine Fixiereinrichtung (19) zugeordnet ist, wobei in einem Produktionsmodus eine jeweilige Position der Mitnehmerelemente (3) am Transportmittel (2) durch die Fixiereinrichtung (19) fixiert ist und wobei in einem Wechselmodus die Fixierung der Mitnehmerelemente (3) durch die jeweils zugeordnete Fixiereinrichtung (19) lösbar ist.
